# EUROPÄISCHE PATENTSCHRIFT

(11) **EP 1 738 927 B1**
(45) Veröffentlichungstag und Bekanntmachung des Hinweises auf die Patenterteilung: **18.11.2009**
(21) Anmeldenummer: 05105953.3
(22) Anmeldetag: 30.06.2005
(51) Int. Cl.: B60B 27/00

(54) **Spielfreie Schraubenverbindung zwischen einer Radnabeneinheit und einem Gelenkwellenstummel (aussen) kurzer Bauweise**
Screw connection without play between a wheel hub unit and an end of an articulated shaft of short design
Connection par écrou sans jeu entre un assemblage d'un moyeu de roue et la fin d'un arbre articulé de construction étroite

(43) Veröffentlichungstag der Anmeldung: 03.01.2007
(73) Patentinhaber: Ford Global Technologies, LLC, Dearborn, MI 48126 (US)
(72) Erfinder: Kremer, Carsten, 52159 Roetgen (DE); Schellhaas, Ralf, 50997 Köln (DE); Tarnowski, Martin, 42655 Solingen (DE); Haertel, Alexander, 50670 Köln (DE); Weykam, Stephan, 50259 Pulheim (DE)
(74) Vertreter: Drömer, Hans-Carsten

(56) Entgegenhaltungen:
- EP-A- 1 375 196
- WO-A-2005/051604
- DE-A1- 3 536 437
- US-A- 4 881 842
- US-A1- 2003 064 817
- US-A1- 2004 083 612

## Beschreibung

Die Erfindung betrifft eine Lagervorrichtung mit den Merkmalen des Anspruchs 1.

Bekannte Lagervorrichtungen werden zum Übertragen einer Motorkraft eines Kraftfahrzeuges auf Räder bzw. angetriebene Räder verwendet.

Die US 2004/0083612 A1 offenbart eine Lagervorrichtung für ein Rad eines Kraftfahrzeugs, die eine Radnabe und ein äußeres Verbindungselement aufweist. Das äußere Verbindungselement greift mit seinem Schaftbereich in einen zylindrischen Aufnahmebereich ein, wobei der Schaftbereich an seinem Außenumfang und der zylindrische Aufnahmebereich an seinem Innenumfang jeweils eine Verzahnung aufweisen. Dem Schaftbereich, dem Aufnahmebereich und der Radnabe ist eine Befestigungselement zugeordnet. Der zylindrische Aufnahmebereich weist an seinem Innenumfang eine sich bis zu seiner Stirnkante erstreckende, durchgehende Evolventenverzahnung auf, wobei der Schaftbereich eine dazu korrespondierende Evolventenverzahnung aufweist.

Die US 4,881,842 betrifft eine zur US 2004/0083612 A1 ähnliche Lagervorrichtung, wobei eine spielfreie Verbindung mittels Zusammenwirken gerader und helixförmiger Keilverzahnung erreicht werden soll.

Die DE 35 36 437 A1 offenbart Wälzlager, insbesondere für Räder von Kraftfahrzeugen, dessen Außenring(e) axial und radial formschlüssig in einem Gehäuse befestigt ist (sind), oder dessen Außenring mit einem Befestigungsflansch versehen ist und dessen zwei Innenringe auf einer Nabe angeordnet sind. Einer der Innenringe liegt axial einseitig an einem Nabenvorsprung an, während der andere auf der anderen Seite einem Abschlußteil gegenübersteht, das über eine Zentralschraube mit der Nabe verbunden ist. Der dem Abschlußteil gegenüberstehende Innenring besitzt einen größeren Querschnitt als der andere Innenring, und ist wie an sich bekannt, mit Preßsitz auf der Nabe befestigt.

Die DE 103 35 342 A1 betrifft eine Lagervorrichtung für ein Antriebsrad eines Fahrzeuges, umfassend ein doppelreihiges Wälzlager, eine Radnabe, die einstückig mit einem Radbefestigungsflansch an einem Ende derselben ausgebildet ist und einen zylindrisch abgestuften Abschnitt von kleinerem Durchmesser aufweist, der sich axial vom anderen Ende der Radnabe weg erstreckt. Ein innerer Ring, der auf den abgestuften Abschnitt kleineren Durchmessers der Radnabe angebracht ist, ist vorgesehen, wobei der innere Ring auf der Radnabe durch einen Verstemmabschnitt gesichert ist, der durch plastisches Verformen des Endes des abgestuften Abschnittes radial nach außen ausgebildet ist. Ein äußeres Gelenkelement weist eine Schulter auf, die so ausgestaltet ist, um an die Endoberfläche des verstemmten Abschnittes anzustoßen, wobei das äußere Gelenkelement einen Schaftabschnitt aufweist, der sich axial von der Schulter weg erstreckt. Das äußere Gelenkelement ist in die Radnabe mittels eines mit Kerbverzahnung ausgestalteten Abschnitts eingeschoben, um ein lösbares Eingreifen mit der Radnabe zu erreichen. Die Lagervorrichtung weist weiter ein Vorspannmittel auf, das in dem mit Kerbverzahnung eingepaßten Abschnitt zwischen dem Schaftabschnitt des äußeren Gelenkelementes und der Radnabe ausgebildet ist. Ein Befestigungsmittel zum Verbinden der Radnabe und des äußeren Gelenkelementes ist ebenso vorgesehen wie ein Lösemittel, das so gestaltet ist, daß es auf der Radnabe zum Entfernen des Befestigungsmittels angeordnet ist.

Die EP 0 936 086 B1 offenbart ein Achsaggregat für das Antreiben eines Fahrzeugrades, das mit einem Doppelgelenk kombiniert ist. Das Achsaggregat weist einen Außenring, eine Nabe, ein Antriebswellenelement und eine Vielzahl von Rollenelementen auf. Eine Keilwelle weist eine äußere Umfangsfläche auf, die mit einem inneren Eingriffsabschnitt im Allgemeinen peripher ausgebildet ist, wobei die Nabe eine innere Umfangsfläche aufweist, die mit einem äußeren Eingriffsabschnitt im Allgemeinen peripher an einer Stelle in Ausrichtung mit dem inneren Eingriffsabschnitt ausgebildet ist. Ferner weist das Achsaggregat einen Anschlagring auf. Ein Laufbahnring wird durch Bördeln befestigt, wobei ein Dichtungselement aus einem elastischen Material elastisch zwischen dem Innenlaufbahnring und dem Antriebswellenelement gehalten ist, um den Keileingriffsabschnitt zwischen der Keilbohrung und der Keilwelle abzudichten, und um den Bördelabschnitt der Nabe abzudichten.

Die US 2004/00222694 A1 betrifft ein exzentrisches Modul für Kraftfahrzeuge, wobei das exzentrische Modul einen Halbschaft oder Stummelschaft aufweist, der zur Drehbarkeit in einer Bohrung einer Gelenkverbindung getragen wird.

Die US 5,725,285 offenbart eine Radlagerung, insbesondere für die angetriebenen Vorderräder von Kraftfahrzeugen, mit einem auf einem Radflansch angeordneten oder in diesem integrierten Wälzlager und einer das Antriebsmoment über eine Keilverzahnung einleitenden Gelenkwelle. Die Gelenkwelle und der Radflansch sind über eine Schraubverbindung miteinander axial verspannt. Auf das an der Gelenkwelle angeordnete Gewinde ist eine hülsenartige Gewindemutter aufschraubbar, die mit einem axial federnden Radialflansch unter Vorspannung am Radflansch anliegt und mit einer Einrichtung (Innensechskant) für ein Werkzeug versehen ist, womit die Gewindemutter auf das Gewinde schraubbar ist. Der mit Gewinde versehene Bereich der Gewindemutter ist am Außenumfang zur Verdrehsicherung mit Rastern versehen, die in die Keilverzahnung eingreifen.

Bekannte Lagervorrichtungen können derart ausgestaltet werden, daß in dem Schaftbereich, der als Gelenkwellenstummel kurzer Bauweise ausgestaltet ist, eine Gewindebohrung angeordnet ist. Zur Verbindung des äußeren Verbindungselementes mit der Radnabe wird ein Befestigungselement, welches bevorzugt als Schraubenbolzen ausgestaltet ist, verwendet, so daß das äußere Verbindungselement hinreichend mit der Radnabe verbindbar ist. Während des Betriebes des Kraftfahrzeuges wurde beobachtet, daß sich die durch den Befestigungsbolzen hervorgerufene Verbindung löst. Aufgrund dieses Lösens traten vermehrt Geräuschprobleme auf, beispielsweise hervorgerufen durch den Rutsch-Gleit-Effekt (stick-slip-Effekt), der ein so genanntes Ping-Geräusch oder Losbrechgeräusch hervorruft, wobei aber auch ein Aneinanderschlagen von sich gegenüberliegenden Anlageflächen des äußeren Verbindungselementes und der Radnabe, das so genannte Clonk-Geräusch, entstehen kann, wobei die jeweiligen Verzahnungen, bzw. deren Zahnflanken aneinander schlagen. Diese Geräusche bzw. das Lösen der Verbindung werden bzw. wird insbesondere dadurch hervorgerufen, daß die Verzahnungen mit einem gewissen Spiel ausgestaltet sind.

Von daher liegt der Erfindung die Aufgabe zugrunde, eine Lagervorrichtung der eingangs genannten Art mit einfachen Mitteln dahin gehend zu verbessern, daß derartige Geräusche bei einem Betrieb des Kraftfahrzeuges vermieden werden, wobei der Zusammenbau der Lagervorrichtung erleichtert werden soll.

Erfindungsgemäß wird die Aufgabe durch eine Lagervorrichtung mit den Merkmalen des Anspruchs 1 gelöst.

Eine durchgehende Evolventenverzahnung im Sinne der Erfindung ist bevorzugt auf einem Mittenabschnitt der Radnabe angeordnet.

Die Helixförmige oder auch schraubenförmige Evolventenverzahnung ist an einem Schaftbereich des äußeren Verbindungselementes angeordnet und beginnt in axialer Richtung gesehen etwas beabstandet von einer Anlagefläche und erstreckt sich entlang einer Längsachse bevorzugt bis zu einer freien Stirnkante des Schaftbereiches, kann aber auch vor dieser enden. Die Verzahnungsform ist im Querschnitt gesehen eine Evolvente und entlang der Zahnlängsachse eine schraubenförmige Verzahnung.

Aufgrund der erfindungsgemäßen Ausgestaltung ist es möglich, daß das äußere Verbindungselement direkt in der Fahrzeuglinie bzw. Fertigungslinie mit der vorgespannten Radnabenlagereinheit zusammengebaut werden kann.

Günstig im Sinne der Erfindung ist, wenn die Radnabe und das äußere Verbindungselement mit ihren jeweils zugeordneten Anlageflächen in dem vormontierten Zustand axial beabstandet sind. Aufgrund der Wechselwirkung der durchgehenden Evolventenverzahnung mit der helixförmigen Evolventenverzahnung wird eine spielfreie Verbindung bewirkt, wobei gleichzeitig die Kräfte zum Zusammenbau des äußeren Verbindungselementes mit der Radnabe definiert werden können, was bedeutet, daß die Zusammenbaukräfte, im vergleich zu Ausgestaltungen, die keine helixförmige Evolventenverzahnung aufweisen, erhöht werden können.

Zweckmäßig im Sinne der Erfindung ist, daß der Schaftbereich derart ausgestaltet sein kann, daß der axiale Abstand von einander zugeordneten Anlageflächen des äußeren Verbindungselementes und der Radnabe im vormontierten Vorstand einen minimalen und einen maximalen Abstand aufweisen kann. In einer bevorzugten Ausgestaltung kann ein Verhältnis des axialen Abstandes zu der verfügbaren Verzahnungseingriffslänge in einem Betrag zwischen minimal 10% und maximal 75 % der ausgelegten Verzahnungseingriffslänge des äußeren Verbindungselementes im Eingriff aufweisen. Hierbei kann vorteilhaft auf ein radiales Spiel der miteinander zu verbindenden Bauteile (äußeres Verbindungselement, Radnabe) verzichtet werden, wobei ein einfacher Zusammenbau mit einer minimalen Einzugskraft zur Verfügung gestellt werden kann. Bei einem maximalen Abstand der einander zugeordneten Anlageflächen ist lediglich eine maximale Einzugskraft an dem Befestigungselement erforderlich. Beispielsweise könnte eine Vorspannkraft maximal ca. 80% der Kapazität des Befestigungselementes (Schraubenkapazität) und/oder die Einzugskraft maximal ca. 50% der Kapazität des Befestigungselementes (Schraubenkapazität) aufweisen. Selbstverständlich könnte die Einzugkraft bis zur maximal zulässigen Schraubenkapazität ausgelegt werden.

Die erfindungsgemäße Ausgestaltung bewirkt vorteilhaft einen Preßsitz der miteinander zu verbindenden Bauteile (äußeres Verbindungselement, Radnabe). Bei der Montage des äußeren Verbindungselementes an die Radnabe ist vorteilhaft vorgesehen, daß der Schaftbereich mit seiner helixförmigen Evolventenverzahnung mittels des in einer Befestigungsrichtung drehbaren Befestigungselementes in den zylindrischen Aufnahmebereich herein gezogen wird, wobei das Befestigungselement zur Lagereinstellung in einem zur Befestigungsrichtung entgegen gesetzten Drehsinn drehbar sein kann. Damit können die Bauteile der Lagervorrichtung (äußeres Verbindungselement, Radnabe) vorteilhaft in einem einzigen Montagegang miteinander verbunden werden, indem einfach das Befestigungselement in eine Gewindebohrung des Schaftbereiches eingedreht wird. Hierbei wird der Schaftbereich bzw. das äußere Verbindungselement axial in Richtung zur Radnabe gezogen, wobei die jeweilige Evolventenverzahnung einen spielfreien Preßsitz hervorruft. Das Befestigungselement stützt sich mit seiner Kopfseite radnabenseitig an der Radnabe ab. Sofern es erforderlich sein sollte, daß an der Fertigungslinie des Kraftfahrzeuges eine definierte Vorspannung des Befestigungselementes erforderlich sein sollte, ist zweckmäßig vorgesehen, daß das Befestigungselement zur finalen Befestigung wiederum in Befestigungsrichtung drehbar ist.

In einer bevorzugten Ausgestaltung weist die helixförmige oder auch schraubenförmige Evolventenverzahnung des Schaftbereiches eine definierte Neigung mit einer Gradzahl von maximal 22 Minuten bezogen auf eine Mittelachse bzw. die Längsachse der Verzahnung des äußeren Verbindungselementes auf. Natürlich wirkt sich die Neigung direkt auf die Schraubenkapazität aus, so daß vorzugsweise eine Neigung derart gewählt wird, daß die maximale Schraubenkapazität nicht überschritten wird. Die helixförmige Evolventenverzahnung ist bevorzugt in Richtung zur Anlagefläche des äußeren Verbindungselementes geneigt, kann aber selbstverständlich auch entgegen gesetzt, also von der Anlagefläche des äußeren Verbindungselementes weggerichtet geneigt sein.

Günstig im Sinne der Erfindung ist, wenn das Befestigungselement als Schraubenbolzen, bevorzugt als M10-Bolzen ausgestaltet ist, der mit seinem Gewindebolzen in die Gewindebohrung des Schaftbereiches schraubbar ist. Da die Lagervorrichtung vor dem Einzug der Schraube bzw. des Befestigungselementes bzw. durch die einander zugeordneten Evolventenverzahnungen bereits eine Vorspannung aufweist, kann überraschender Weise eine festigkeitsminimierte Schraube eingesetzt werden. Die Schraube kann derart festigkeitsminimiert, bzw. derart unterdimensioniert sein, daß diese nur noch 80% der Gesamtvorspannung der Lagervorrichtung bei dessen Zusammenbau aufbringen muß. Das Befestigungselement kann aber auch derart festigkeitsminimiert sein, daß dieses lediglich zum Einziehen verwendet werden kann, da die wechselwirkenden Evolventenverzahnungen eine genügende Vorspannung bewirken. Somit kann das Befestigungselement auch lediglich als Verliersicherung eingesetzt werden.

Der Schaftbereich des äußeren Verbindungselementes kann auch als Gelenkwellenstummel bezeichnet werden, der bevorzugt in kurzer Bauweise ausgestaltet ist, wobei allerdings zu beachten ist, daß der Gelenkwellenstummel bzw. der Schaftbereich derart ausgestaltet ist, daß das Befestigungselement bei einem maximalen axialen Abstand im vormontierten Zustand in die Gewindebohrung des Schaftbereiches eingreifen kann. Zweckmäßiger Weise ist der Gelenkwellenstummel derart ausgestaltet, daß das Befestigungselement mit mindestens zwei Gewindegängen in die Gewindebohrung eingreift, wenn das Befestigungselement kopfseitig bzw. die Unterlegscheibe an der zugeordneten Anlagefläche anliegt. Gleichzeitig ist eine Überdeckung von bevorzugt mindestens 5% der ausgelegten Verzahnungslänge des äußeren Verbindungselementes im Eingriff mit der zugeordneten Verzahnung des Aufnahmebereiches vorgesehen.

Mittels der erfindungsgemäßen Ausgestaltung wird somit ein einfacher Zusammenbau der einzelnen Komponenten gewährleistet, wobei bei einem maximalen Abstand bereits eine verliersichere Verbindung des äußeren Verbindungselementes mit der Radnabe bzw. deren Aufnahmebereich erreichbar ist. Das Befestigungselement bzw. die Schraube kann dabei überraschender Weise festigkeitsminimiert ausgeführt sein, da bereits eine gewisse Vorspannung in dem vormontierten Zustand anliegt. Die Schraube muß nur noch maximal ca. 80% der Gesamtvorspannung des Systems aufbringen. Die Schraube bzw. das Befestigungselement kann aber auch derart festigkeitsminimiert ausgestaltet sein, daß diese(s) lediglich die Einzugskraft aufbringen muß, also lediglich zum Einziehen und zur Verliersicherung eingesetzt werden kann. Zum Einziehen des äußeren Verbindungselementes in die Radnabe bzw. in deren Aufnahmebereich wird die Schraube in ihrer Befestigungsrichtung gedreht, wobei durch die jeweiligen Evolventenverzahnungen ein Preßsitz bewirkt wird. Selbstverständlich kann zum Einziehen bzw. Einführen des äußeren Verbindungselementes in die Radnabe bzw. in deren Aufnahmebereich auch ein geeignetes Vorrichtungswerkzeug anstelle der Schraube verwendet werden, wobei die Lagervorrichtung mittels der Schraube dann lediglich angezogen wird. Somit wird eine Lagervorrichtung zur Verfügung gestellt, die bei minimalen Aufwand eine hinreichende Verbindung aufweist, bei der Losbrechgeräusche oder das Clonk-Geräusch (aneinander schlagen der Zahnflanken) weitgehend vermieden werden. Vorteilhafter Weise weist das äußere Verbindungselement an seinem inneren Ende eine minimierte freie verformbare Länge auf.

Weitere vorteilhafte Ausgestaltungen sind in den Unteransprüchen und der folgenden Figurenbeschreibung offenbart. Es zeigen:
- Fig. 1: Eine Lagervorrichtung in einem Querschnitt,
- Fig. 2: die Lagervorrichtung aus Figur 1 in einem vormontierten Zustand mit einem maximalen axialen Abstand, und
- Fig. 3: die Lagervorrichtung aus Figur 1 in einem vormontierten Zustand mit einem minimalen axialen Abstand.

In den unterschiedlichen Figuren sind gleiche Teile stets mit denselben Bezugszeichen versehen, so daß diese in der Regel auch nur einmal beschrieben werden.

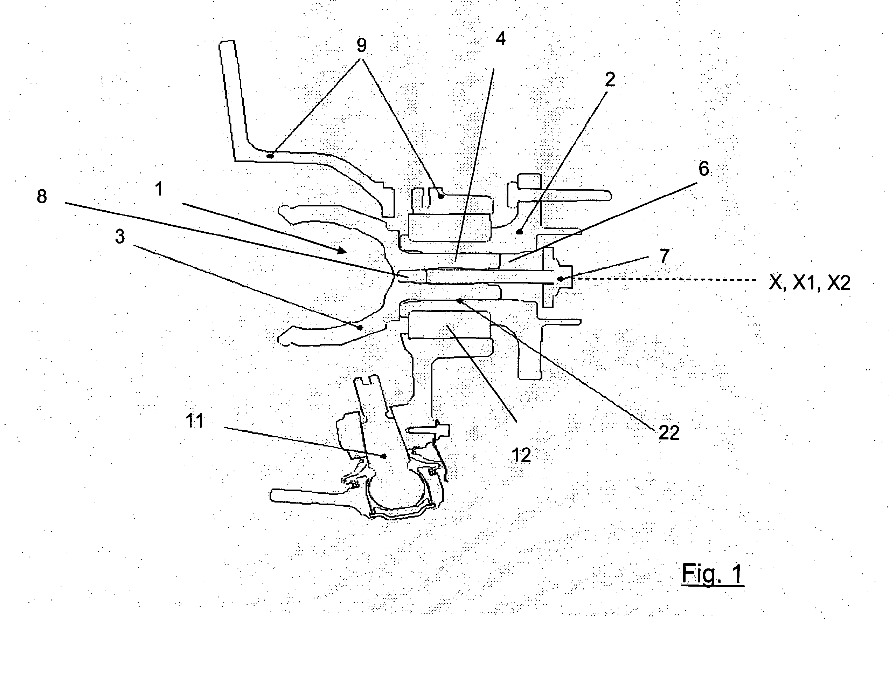

Figur 1 zeigt eine Lagervorrichtung 1 für ein nicht dargestelltes Rad eines nicht dargestellten Kraftfahrzeuges. Die Lagervorrichtung 1 weist eine Radnabe 2 und ein äußeres Verbindungselement 3 auf. Das äußere Verbindungselement 3 greift mit seinem Schaftbereich 4, der im Querschnitt gesehen zumindest bereichsweise zylindrisch ausgestaltet ist in einen daran angepaßten zylindrischen Aufnahmebereich 6 der Radnabe 2 ein, wobei der Schaftbereich 4 an seinem Außenumfang und der zylindrische Aufnahmebereich 6 an seinem Innenumfang jeweils eine Verzahnung aufweisen. Dem Schaftbereich 4 bzw. dem äußeren Verbindungselement 3 und der Radnabe 2 ist ein Befestigungselement 7 zugeordnet.

Der Schaftbereich 4 weist eine zentrale Gewindebohrung 8 auf, in dem das Befestigungselement 7 mit seinem Gewindeabschnitt einschraubbar ist, wobei das Befestigungselement 7 bevorzugt als M10-Schraubenbolzen festigkeitsminimiert ausgestaltet ist. Das äußere Verbindungselement 3 ist mit seiner Mittelachse X1 kongruent zur Mittelachse X2 der Radnabe 2. Beide Mittelachsen X1, X2 sind kongruent zur Mittelachse X der Lagervorrichtung 1.

Der zylindrische Aufnahmebereich 6 weist an seinem Innenumfang zumindest bereichsweise eine durchgehende Evolventenverzahnung auf, wobei der Schaftbereich 4 an seinem Außenumfang zumindest bereichsweise eine helixförmige Evolventenverzahnung aufweist. Insbesondere die helixförmige Evolventenverzahnung an dem Außenumfang des Schaftbereiches 4 ist derart ausgestaltet, daß die Helix lediglich mit entsprechenden Meßgeräten detektierbar ist.

Die Lagervorrichtung 1 ist einer Radaufhängung zugeordnet, welche übliche Bauteile wie beispielsweise einen Steuerschenkel 9 sowie ein unteres Kugelgelenk 11 aufweist. Die Lagervorrichtung 1 ist in üblicher Weise mit Lagerelementen 12 versehen.

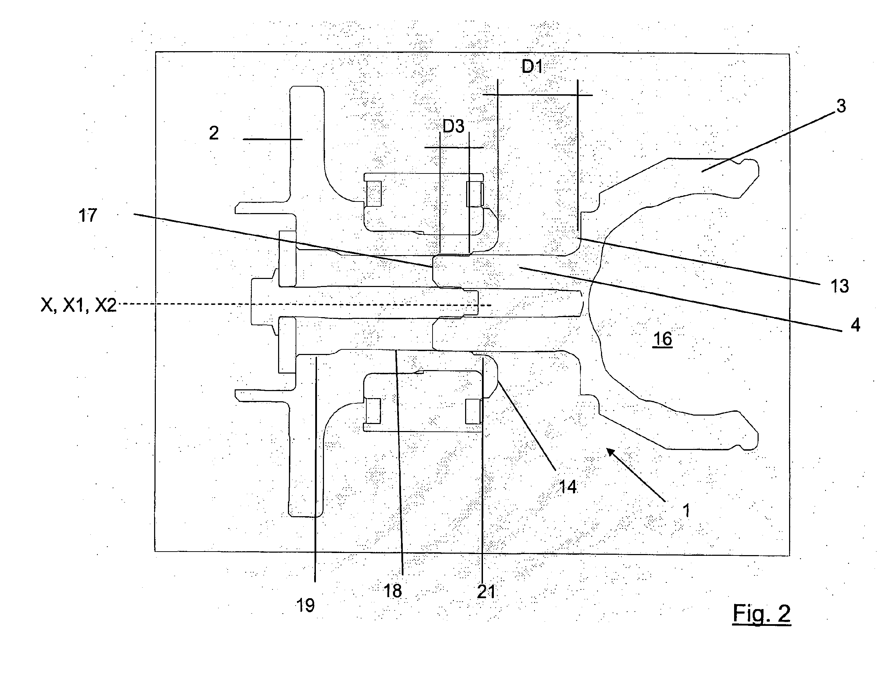

Figur 2 zeigt die Lagervorrichtung 1 in einem vormontierten Zustand mit einem maximalen Abstand D1 einander zugeordneter Anlageflächen 13, 14, wobei das Bezugszeichen 13 die Anlagefläche des äußeren Verbindungselementes 3 und das Bezugszeichen 14 die Anlagefläche der Radnabe 2 bezeichnet. Von daher ist vorteilhaft vorgesehen, daß der Schaftbereich 4, der auch als Gelenkwellenstummel bezeichnet werden kann, in einer kurzen Bauweise derart ausgestaltet ist, daß das Befestigungselement 7 bei dem maximalen Abstand D1 mit seinem Gewindeabschnitt noch derart in die Gewindebohrung 8 eingreifen kann, daß die miteinander zu verbindenden Bauteile (äußeres Verbindungselement 3, Radnabe 2) im vormontierten Zustand verliersicher miteinander verbunden sind. Der Gelenkwellenstummel ist bei dem bevorzugten Ausführungsbeispiel derart ausgestaltet, daß das Befestigungselement 7 mit mindestens zwei Gewindegängen in die Gewindebohrung 8 eingreift, wenn das Befestigungselement 7 kopfseitig bzw. mit seiner Unterlegscheibe an einer zur Anlagefläche 14 gegenüberliegenden Anlagefläche der Radnabe 2 anliegt. Gleichzeitig weisen die in einander greifenden Verzahnungen des äußeren Verbindungselementes 3 und des Aufnahmebereiches 6 eine Überdeckung D3 auf, die in dem bevorzugten Ausführungsbeispiel mindestens einen Betrag von 5% der ausgelegten Verzahnungslänge des äußeren Verbindungselementes 3 im Eingriff mit der zugeordneten Verzahnung des Aufnahmebereiches 6 aufweist.

Das äußere Verbindungselement 3 ist als Gelenkwelle mit einem Aufnahmebereich 16 und dem sich davon wegerstreckenden Schaftbereich 4 ausgestaltet. Der Schaftbereich 4 kann daher als Gelenkwellenstummel bezeichnet werden. Die helixförmige Evolventenverzahnung des Schaftbereiches 4 beginnt in axialer Richtung gesehen etwas beabstandet von der Anlagefläche 13 und erstreckt sich bevorzugt bis zur freien Stirnkante 17 des Schaftbereiches 4, kann aber auch vor der Stirnkante 17 enden. Die Radnabe 2 weist einen Mittelabschnitt 18 auf, der bezogen auf die Mittelachse X2 einen verringerten Innendurchmesser hat als dem Mittelabschnitt 18 vor bzw. nachgelagerte Endabschnitte 19 bzw. 21. Die Evolventenverzahnung der Radnabe 2 ist bevorzugt durchgehend an dem Mittelabschnitt 18 angeordnet.

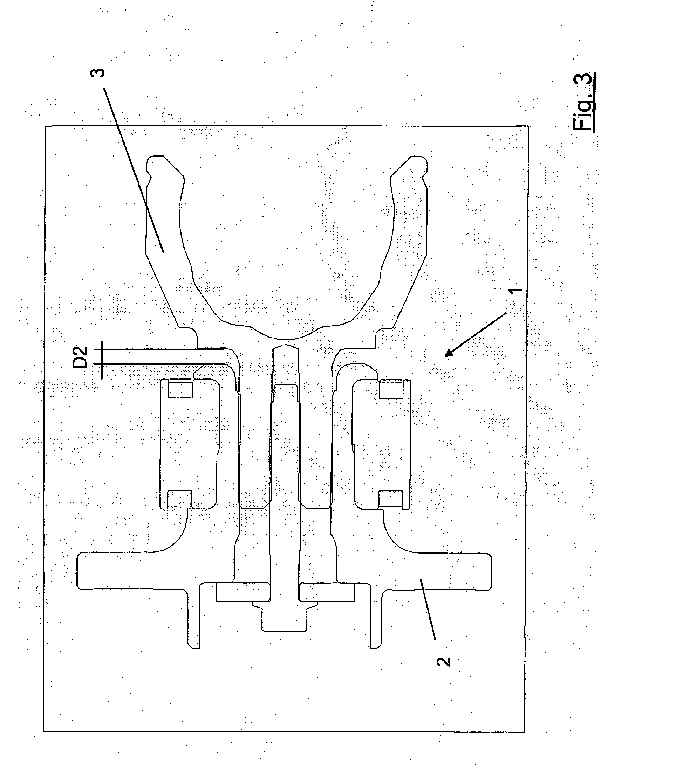

Ausgehend von dem in Figur 2 bzw. 3 dargestellten vormontierten Zustand wird nun das Befestigungselement 7 in einer Befestigungsrichtung gedreht. Hierdurch wird der Schaftbereich 4 bzw. das äußere Verbindungselement 3 entlang der Mittelachse X in den zylindrischen Aufnahmebereich 6 hineingezogen, wobei durch die jeweilige Evolventenverzahnung ein Preßsitz 22 hervorgerufen wird. Vorteilhafterweise wird der Schaftbereich 4 bzw. das äußere Verbindungselement soweit in den zylindrischen Aufnahmebereich 6 hingezogen, bis die Anlagenflächen 13 bzw. 14 hinreichend fest aneinander liegen. Anschließend kann das Befestigungselement 7 zur Lagereinstellung entgegengesetzt zur Befestigungsrichtung, ausreichend weit gedreht werden, um die Lagervorrichtung bzw. das System spannungsfrei zu machen, wobei die hinreichende Befestigung natürlich nicht aufgehoben wird. Sollte es erforderlich sein, eine bestimmte Vorspannung einzustellen, kann das Befestigungselement 7 mit einer finalen Drehung in Befestigungsrichtung gedreht werden. Allerdings hat sich mit der erfindungsgemäßen Ausgestaltung überraschend gezeigt, daß der Einzug und das Aufbringen der Vorspannkraft in einem Arbeitsgang bewirkt werden kann.

Ein hinreichend sicherer bzw. fester Montagezustand der Lagervorrichtung 1 ist in Figur 1 dargestellt.

In Figur 1 ist eine spielfreie Verbindung zwischen der Radnabe 2 und dem äußeren Verbindungselement 3 bzw. seinem Schaftbereich 4, der auch als Gelenkwellenstummel (außen) kurzer Bauweise bezeichnet werden kann, dargestellt. Die erfindungsgemäße Lagervorrichtung 1 zeichnet sich insbesondere dadurch aus, daß Relativbewegungen zwischen dem äußeren Verbindungselement 3 und der Radnabe 2 minimiert sind, wobei ein Zusammenbau des Antriebsstranges bzw. der Lagervorrichtung 1 in der Fahrzeuglinie bzw. Fertigungslinie vorgesehen werden kann. Insbesondere ist darauf hinzuweisen, daß eine Veränderung des maximalen Anzugsmomentes des Befestigungselementes 7 für den Zusammenbau des äußeren Verbindungselementes 3 mit der Radnabe 2 unverändert bleiben kann. Aufgrund der erfindungsgemäßen Ausgestaltung treten auch im Betrieb des Kraftfahrzeuges keine Losbrechgeräusche mehr auf, die beispielsweise durch den Rutsch-Gleit-Effekt (stick-slip-Effekt) hervorgerufen werden können. Gleichzeitig werden aber auch die Clonk-Geräusche vermieden.

Ein weiterer Vorteil der erfindungsgemäßen Lagervorrichtung 1 kann darin gesehen werden, daß das untere Kugelgelenk 11, wie in Figur 1 dargestellt, konusartig ausgestaltet werden kann.

Aufgrund der erfindungsgemäßen Ausgestaltung ist es möglich, eine Lagervorrichtung 1 zur Verfügung zu stellen, die ohne jegliche Schmiermittel, bzw. zur Vermeidung der Geräusche ohne Unterlegscheiben bzw. Distanzscheiben, die beispielsweise aus einem Kunststoff bestehen können, bereitgestellt werden kann. Die erfindungsgemäße Lagervorrichtung 1 kann an allen angetriebenen oder nicht angetriebenen Rädern des Kraftfahrzeuges verwendet werden.

## Patentansprüche

1. Lagervorrichtung für ein Rad eines Kraftfahrzeuges, die eine Radnabe (2) und ein äußeres Verbindungselement (3) aufweist, wobei das äußere Verbindungselement (3) mit seinem Schaftbereich (4) in einem zylindrischen Aufnahmebereich (6) der Radnabe (2) eingreift, und wobei der Schaftbereich (4) an seinem Außenumfang und der zylindrische Aufnahmebereich (6) an seinem Innenumfang jeweils eine Verzahnung aufweisen, und wobei dem Schaftbereich (4) und der Radnabe (2) ein Befestigungselement (7) zugeordnet ist, wobei der zylindrische Aufnahmebereich (6) an seinem Innenumfang in einem Mittelabschnitt (18) eine sich an diesem durchgehend erstreckende Evolventenverzahnung aufweist,
**dadurch gekennzeichnet, daß**
der Schaftbereich (4) an seinem Außenumfang zumindest bereichsweise eine helixförmige Evolventenverzahnung aufweist, so daß das äußere Verbindungselement (3) in einem vormontierten Zustand zur Radnabe (2) beabstandet ist, wobei die Evolventenverzahnungen derart Wechselwirken, daß das äußere Verbindungselement (3) spielfrei mit der Radnabe (2) bzw. deren zylindrischen Aufnahmebereich (6) verbindbar ist, und wobei die Lagervorrichtung (1) mittels der wechselwirkenden Evolventenverzahnungen im vormontierten Zustand vorgespannt ist, und wobei der Schaftbereich (4) derart ausgestaltet ist, daß der axiale Abstand von einander zugeordneten Anlageflächen (13, 14) im vormontierten Zustand einen minimalen Betrag (D2) und einen maximalen Betrag (D1) aufweisen kann.

2. Lagervorrichtung nach Anspruch 1,
**dadurch gekennzeichnet, daß**
eine Vorspannkraft maximal 80% der Kapazität des Befestigungselementes (7) und/oder eine Einzugskraft maximal 50% der Kapazität des Befestigungselementes (7) aufweist.

3. Lagervorrichtung nach einem der Ansprüche 1 oder 2,
**dadurch gekennzeichnet, daß**
der Schaftbereich (4) mit seiner helixförmigen Evolventenverzahnung mittels des in einer Befestigungsrichtung drehbaren Befestigungselementes (7) in den zylindrischen Aufnahmebereich (6) herein gezogen wird, wobei Einzug und Aufbringen einer Vorspannkraft gleichzeitig durchführbar sind.

4. Lagervorrichtung nach einem der vorhergehenden Ansprüche,
**dadurch gekennzeichnet, daß**
die helixförmige Evolventenverzahnung des Schaftbereiches (4) eine Neigung mit einer Gradzahl von maximal 22 Minuten, bezogen auf eine Mittelachse (X1) des äußeren Verbindungselementes (3) aufweist.

5. Lagervorrichtung nach einem der vorhergehenden Ansprüche,
**dadurch gekennzeichnet, daß**
das Befestigungselement (7) als Schraubenbolzen ausgestaltet ist, der mit seinem Gewindebolzen in eine Gewindebohrung (8) des Schaftbereiches (4) schraubbar ist.

6. Lagervorrichtung nach einem der vorhergehenden Ansprüche,
**dadurch gekennzeichnet, daß**
das Befestigungselement (7) derart festigkeitsminimiert ist, daß dieses 80% der Gesamtvorspannung der Lagervorrichtung (1) bei dessen Zusammenbau aufbringt.

7. Lagervorrichtung nach einem der vorhergehenden Ansprüche,
**dadurch gekennzeichnet, daß**
das Befestigungselement (7) derart festigkeitsminimiert ist, daß dieses lediglich eine Einzugskraft aufbringt.

8. Lagervorrichtung nach einem der vorhergehenden Ansprüche,
**dadurch gekennzeichnet, daß**
der Schaftbereich (4) als Gelenkwellenstummel in kurzer Bauweise derart ausgestaltet ist, daß das Befestigungselement (7) mit zwei Gewindegängen in eine Gewindebohrung (8) eingreift, wobei eine Überdeckung (D3) von mindestens 5% der Verzahnungslänge des äußeren Verbindungselementes (3) im Eingriff mit der Verzahnung des Aufnahmebereiches (6) vorgesehen ist.

## Claims

1. Bearing device for a wheel of a motor vehicle, which has a wheel hub (2) and an outer connecting element (3), the outer connecting element (3) with its shank area (4) engaging in a cylindrical seating area (6) of the wheel hub (2), and the shank area (4) on its outer circumference and the cylindrical seating area (6) on its inner circumference each having a toothing system, and a fastening element (7) being assigned to the shank area (4) and the wheel hub (2),
the cylindrical seating area (6) having an involute toothing extending continuously on its inner circumference in a central section (18), **characterized in that** the shank area (4) has a helical involute toothing at least in areas of its outer circumference, so that the outer connecting element (3) in a pre-assembled state is spaced at a distance from the wheel hub (2), the involute toothing systems interacting in such a way that the outer connecting element (3) can be connected without any backlash to the wheel hub (2) or the cylindrical seating area (6) thereof, and the bearing device (1) in pre-assembled state being pre-tensioned by means of the interacting involute toothing systems, and
the shank area (4) being designed in such a way that in the pre-assembled state the axial spacing between paired bearing faces (13, 14) can have a minimum value (D2) and a maximum value (D1).

2. Bearing device according to Claim 1,
**characterized in that**
a pre-tensioning force is up to 80% of the capacity of the fastening element (7) and/or an insertion force is up to 50% of the capacity of the fastening element (7).

3. Bearing device according to one of the preceding Claims 1 or 2,
**characterized in that**
the shank area (4) with its helical involute toothing is drawn into the cylindrical seating area (6) by means of the fastening element (7) rotatable in a fastening direction, insertion and application of a pre-tensioning force being feasible simultaneously.

4. Bearing device according to any one of the preceding claims,
**characterized in that**
the helical involute toothing of the shank area (4) has an angular inclination of up to 22 minutes in relation to central axis (X1) of the outer connecting element (3).

5. Bearing device according to any one of the preceding claims,
**characterized in that**
the fastening element (7) takes the form of a bolt, which with its threaded section can be screwed into a tapped hole (8) in the shank area (4).

6. Bearing device according to any one of the preceding claims,
**characterized in that**
the fastening element (7) is of minimal strength, in such a way that during assembly it applies 80% of the overall pre-tensioning of the bearing device (1).

7. Bearing device according to any one of the preceding claims,
**characterized in that**
the fastening element (7) is of minimal strength in such a way that it merely applies an insertion force.

8. Bearing device according to any one of the preceding claims,
**characterized in that**
the shank area (4) takes the form of a short stub shaft, in such a way that the fastening element (7) engages with two thread turns in a tapped hole (8), an overlap (D3) of at least 5% of the toothing length of the outer connecting element (3) being provided for meshing with the toothing system of the seating area (6).

## Revendications

1. Dispositif de palier pour une roue d'un véhicule automobile, qui présente un moyeu de roue (2) et un élément de connexion extérieur (3), l'élément de connexion extérieur (3) venant en prise avec sa région d'arbre (4) dans une région de logement cylindrique (6) du moyeu de roue (2), et la région d'arbre (4), sur sa périphérie extérieure, et la région de logement cylindrique (6), sur sa périphérie intérieure, présentant chacune une denture, et un élément de fixation (7) étant associé à la région d'arbre (4) et au moyeu de roue (2), la région de logement cylindrique (6) présentant sur sa périphérie intérieure, dans une portion centrale (18), une denture de développante s'étendant de manière continue sur celle-ci,
**caractérisé en ce que**
la région d'arbre (4) présente, sur sa périphérie extérieure au moins en partie une denture de développante de forme hélicoïdale, de sorte que l'élément de connexion extérieur (3) soit espacé du moyeu de roue (2) dans un état prémonté, les dentures de développante interagissant les unes avec les autres de telle sorte que l'élément de connexion extérieur (3) puisse être connecté sans jeu au moyeu de roue (2) ou à sa région de logement cylindrique (6), et le dispositif de palier (1) étant précontraint dans l'état prémonté au moyen des dentures de développante interagissant, et la région d'arbre (4) étant configurée de telle sorte que la distance axiale des surfaces d'appui associées mutuellement (13, 14) puisse présenter dans l'état prémonté une valeur minimale (D2) et une valeur maximale (D1).

2. Dispositif de palier selon la revendication 1,
**caractérisé en ce**
**qu'**une force de précontrainte représente au moins 80% de la capacité de l'élément de fixation (7) et/ou une force de serrage représente au maximum 50% de la capacité de l'élément de fixation (7).

3. Dispositif de palier selon la revendication 1 ou 2,
**caractérisé en ce que**
la région d'arbre (4) est serrée avec sa denture de développante hélicoïdale au moyen de l'élément de fixation (7) pouvant tourner dans une direction de fixation dans la région de logement cylindrique (6), le serrage et l'application d'une force de précontrainte pouvant s'effectuer en même temps.

4. Dispositif de palier selon l'une quelconque des revendications précédentes,
**caractérisé en ce que**
la denture de développante hélicoïdale de la région d'arbre (4) présente une inclinaison d'un nombre de degrés d'au maximum 22 minutes par rapport à un axe médian (X1) de l'élément de connexion extérieur (3).

5. Dispositif de palier selon l'une quelconque des revendications précédentes,
**caractérisé en ce que**
l'élément de fixation (7) est réalisé sous forme de boulon fileté qui peut être vissé avec sa partie filetée dans un alésage fileté (8) de la région d'arbre (4).

6. Dispositif de palier selon l'une quelconque des revendications précédentes,
**caractérisé en ce que**
l'élément de fixation (7) a une solidité minimisée, de telle sorte que celui-ci fournisse 80% de la précontrainte totale du dispositif de palier (1) lors de son assemblage.

7. Dispositif de palier selon l'une quelconque des revendications précédentes,
**caractérisé en ce que**
l'élément de fixation (7) a une solidité minimisée, de telle sorte qu'il ne fournisse qu'une force de serrage.

8. Dispositif de palier selon l'une quelconque des revendications précédentes,
**caractérisé en ce que**
la région d'arbre (4) est réalisée sous forme de bout d'arbre articulé de construction courte, de telle sorte que l'élément de fixation (7) vienne en prise avec deux pas de filetage dans un alésage fileté (8), un recouvrement (D3) d'au moins 5% de la longueur de la denture de l'élément de connexion extérieur (3) étant prévu en prise avec la denture de la région de logement (6).
